# FASCICULE DE BREVET EUROPEEN

(11) **EP 0 802 850 B1**
(45) Date de publication et mention de la délivrance du brevet: **06.03.2002**
(21) Numéro de dépôt: 95940296.7
(22) Date de dépôt: 09.11.1995
(51) Int. Cl.: B29C 45/17, B60R 13/02

(54) **PANNEAU DE MATIERE TEL QUE PAR EXEMPLE PANNEAU DE PORTIERE DE VEHICULE PRESENTANT DES RENFORTS ET UNE POIGNEE**
PLATTE WIE Z.B. FAHRZEUGTUERPLATTE MIT VERSTAERKUNGEN UND HANDGRIFF
PANEL OF MATERIAL SUCH AS A VEHICLE DOOR PANEL HAVING REINFORCEMENTS AND A HANDLE

(43) Date de publication de la demande: 29.10.1997
(73) Titulaire: PLASTIC OMNIUM AUTO INTERIEUR, 69007 Lyon (FR)
(72) Inventeur: D'HOOREN, Jean-Jacques, F-59147 Gondecourt (FR)
(74) Mandataire: Duthoit, Michel
(86) Numéro de dépôt international: FR9501480
(87) Numéro de publication internationale: WO9717184

(56) Documents cités:
- EP-A- 0 585 799
- EP-A- 0 628 395
- DE-C- 4 002 503
- FR-A- 2 724 131
- FR-A- 2 724 214
- US-A- 5 417 916
- INDUSTRIAL & PRODUCTION ENGINEERING, vol. 15, no. 1, Mars 1991, MUNICH, DE, pages 9-10, 12, XP000287284 JAROSCHEK C: "INTERNAL GAS PRESSURE FOR EXPELLING EXCESS MELT"
- PATENT ABSTRACTS OF JAPAN vol. 95, no. 2, 31 Mars 1995 & JP,A,06 328488 (IDEMITSU PETROCHEM CO LTD), 29 Novembre 1994,

## Description

L'invention est relative à un procédé de fabrication d'un panneau de matière, notamment destiné à réaliser un élément d'habillage intérieur de carrosserie de véhicule, tel que, par exemple, un panneau de portière.

La présente invention concerne également les panneaux obtenus par un tel procédé.

Bien que plus particulièrement conçu pour une application dans le secteur automobile, le procédé conforme à l'invention pourra également être utilisé dans tous les domaines de l'activité économique dans lesquels on est amené à produire des panneaux présentant à la fois des excroissances et des éléments de renforcement.

Actuellement, on connaît différents panneaux munis de nervures de renforcement réalisées dans la masse.

Toutefois, dans ces derniers, la matière des nervures ne présente pas un gradient de densité permettant des caractéristiques de compacité au voisinage de leur surface qui soient suffisantes pour assurer une bonne absorption des contraintes mécaniques externes et renforcer ainsi le panneau de manière efficace.

Pour remédier à cet inconvénient, on connaît, notamment du document EP-A-0.585.799, un procédé de fabrication d'un panneau de matière, notamment d'habillage intérieur de carrosserie de véhicule, comprenant au moins une couche, constituant une âme, dans lequel :
- on moule, entre deux matrices, la couche âme en prévoyant localement des surépaisseurs, aptes à constituer des nervures de renforcement réalisées dans la masse du panneau, au niveau de l'une desdites matrices,
- on injecte du gaz sous pression axialement dans lesdites surépaisseurs afin de pousser la matière de ladite couche âme de manière à réaliser des poutres caissons tubulaires.

Cela étant, ce panneau ne présente pas d'excroissance pouvant donner au panneau des fonctionnalités supplémentaires, telles qu'une poignée.

Pour fabriquer des panneaux munis à la fois d'excroissances et d'éléments de renforcement, on a recours à des procédés classiques en trois étapes successives. On moule tout d'abord, par exemple, une couche support. On rapporte ensuite une pièce extérieure formée indépendamment constituant une excroissance. Enfin, on assujettit les éléments de renforcement au panneau.

Toutefois, de telles techniques présentent l'inconvénient de multiplier le nombre d'opérations de fabrication. En effet, pour obtenir la pièce finale, il faut former séparément la couche support, l'excroissance et les éléments de renforcement, prévoir sur chacun des moyens pour permettre leur coopération puis les fixer entre eux.

De plus, de tels procédés consomment beaucoup de matières, ce qui contribue à augmenter leur coût de revient total.

On connaît encore, notamment du document US-A-5,417,916, un procédé de fabrication d'articles dans lequel on injecte du gaz dans l'épaisseur de l'article pour dévier de la matière vers des zones difficiles à remplir, en formant un surplus de matière, extérieure à l'article. Ce surplus se trouve cependant dans une zone inintéressante de l'article. Il est d'ailleurs éliminé.

Le but de la présente invention est de proposer un procédé de fabrication d'un panneau présentant au moins une excroissance et des éléments de renforcement qui permet de pallier les inconvénients précités en proposant leur réalisation dans la masse de la pièce.

Un autre but de la présente invention est de proposer un procédé ainsi qu'un panneau obtenu par sa mise en oeuvre intégrant dans une même structure plusieurs fonctionnalités telles que, par exemple, dans le cas d'un panneau de portière de véhicule, l'habillage intérieur de la carrosserie grâce au panneau lui-même, le confort du passager grâce aux excroissances constituant, par exemple, des poignées et l'amélioration de la sécurité grâce à des éléments de renforcement intégré.

Un autre but de la présente invention est de proposer un procédé de fabrication d'un panneau présentant des propriétés satisfaisantes d'absorption des chocs et, en particulier des chocs localisés.

Un autre but de la présente invention est de proposer un procédé de fabrication d'un panneau dont les éléments de renforcement soient constitués d'une matière compactée en surface.

Un autre but de la présente invention est de proposer un procédé de fabrication d'un panneau qui présente des éléments de renforcement répartis localement suivant les contraintes d'utilisation du panneau.

Par ailleurs, un avantage de l'invention est de permettre de diminuer la quantité de matière consommée pour la fabrication du panneau et de limiter ainsi son coût et son poids.

Un autre avantage de la présente invention est de faciliter le recyclage du panneau.

D'autres buts et avantages de la présente invention apparaîtront au cours de la description qui va suivre qui n'est donnée qu'à titre indicatif et qui n'a pas pour but de la limiter.

La présente invention concerne un procédé de fabrication d'un panneau de matière, notamment destiné à réaliser un élément d'habillage intérieur de carrosserie de véhicule, tel que, par exemple, un panneau de portière, comprenant au moins une couche, notamment thermoplastique, constituant une âme, munie d'une face intérieure et d'une face extérieure, dans lequel :
- on moule, entre deux matrices, la couche âme en prévoyant localement des surépaisseurs, aptes à constituer des nervures de renforcement réalisées dans la masse du panneau, au niveau de l'une desdites matrices, dite inférieur,
- on injecte du gaz sous pression axialement dans lesdites surépaisseurs afin de pousser la matière de ladite couche âme de manière à réaliser des poutres caissons tubulaires, caractérisé par le fait que
- on dévie latéralement ladite matière poussée lors de l'injection du gaz, vers au moins un orifice communiquant avec une zone de dégagement, réalisée dans l'autre matrice, dite supérieure,
- on forme, dans la masse du panneau, pour lui conférer des fonctionnalités de confort, au moins une excroissance avec ladite matière déviée latéralement, dans ladite zone de dégagement.

La présente invention concerne également un panneau de matière, obtenu par la mise en oeuvre du procédé décrit plus haut, notamment destiné à réaliser un élément d'habillage intérieur de carrosserie de véhicule, tel que, par exemple, un panneau de portière, comprenant au moins une couche, notamment thermoplastique, constituant une âme, munie d'une face intérieure et d'une face extérieure, caractérisé par le fait que ladite couche âme présente :
- des surépaisseurs, aptes à constituer des nervures de renforcement réalisées dans la masse du panneau, formant des poutres caissons tubulaires,
- au moins une excroissance, également réalisée dans la masse du panneau.

L'invention sera mieux comprise si l'on se réfère à la description suivante ainsi qu'aux dessins en annexe qui en font partie intégrante.

La figure 1 est une vue latérale d'une pièce obtenue par la mise en oeuvre du procédé conforme à l'invention.

La figure 2 est une vue de face de la pièce représentée à la figure 1, la partie gauche étant une demi-vue représentant plus particulièrement sa face intérieure et la partie droite étant une demi-vue représentant plus particulièrement sa face extérieure.

Les figures 3a à 3d représentent schématiquement, en vue de coupe selon l'axe III-III de la figure 2, les différentes étapes du procédé de fabrication conforme à l'invention.

La figure 4 est une vue de coupe selon l'axe IV-IV de la figure 2 qui illustre plus particulièrement le déplacement de la matière lors de l'injection du gaz.

La présente invention concerne un procédé de fabrication d'un panneau, notamment destiné à réaliser un élément d'habillage intérieur de carrosserie de véhicule, tel que, par exemple, un panneau de portière.

Bien que plus particulièrement conçue pour une application dans le secteur automobile, le procédé conforme à l'invention pourra également s'appliquer dans tous les domaines de l'activité économique dans lesquels on est amené à produire des panneaux présentant à la fois des excroissances et des éléments de renforcement.

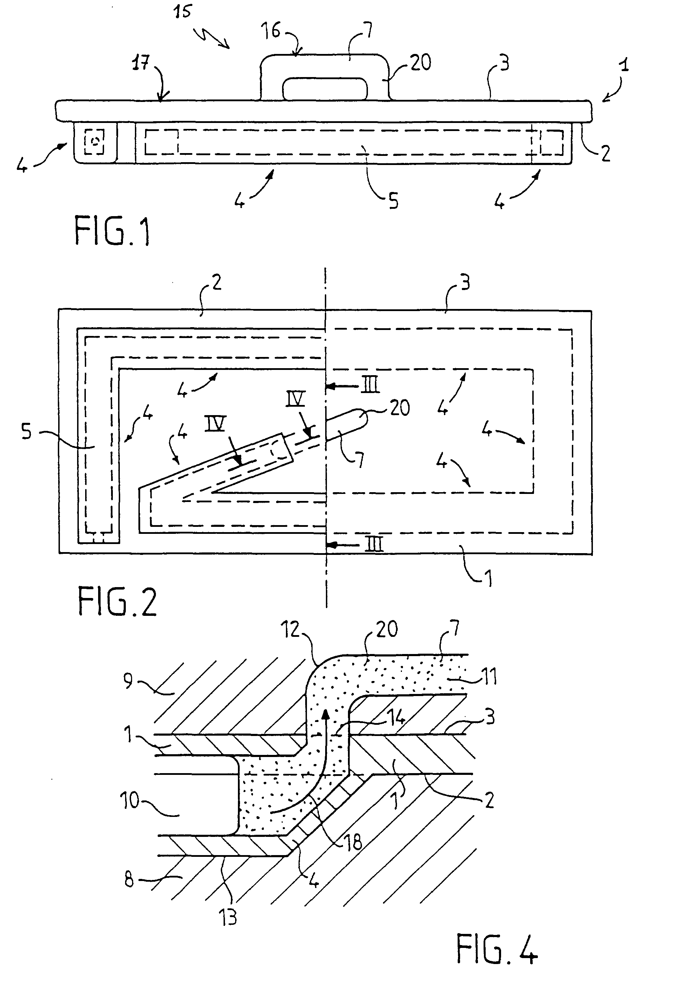

Les figures 1 et 2 montrent un panneau comprenant au moins une couche 1, notamment de matière thermoplastique, constituant une âme munie d'une face intérieure 2 et d'une face extérieure 3.

En ce qui concerne la nature de la matière notamment thermoplastique utilisée, il pourra s'agir, par exemple, de polypropylène, de polyamide, de polyuréthane, d'acrylonitryl butadiène styrène ou autre, chargé ou non d'éléments de rigidification tels que des fibres de verre.

Selon l'invention, on moule, entre deux matrices la couche âme 1, en prévoyant localement une ou des surépaisseurs 10. Ces dernières constituent des nervures 4 de renforcement réalisées dans la masse du panneau.

On injecte ensuite du gaz sous pression axialement dans lesdites surépaisseurs 10 afin de pousser la matière de la couche âme 1 de manière à réaliser des poutres caissons tubulaires 5. Par axialement, on entend suivant une direction rectiligne, sensiblement orthogonale à l'épaisseur du panneau.

Cette structure permet, par exemple, de renforcer les caractéristiques de rigidité et de résistance aux chocs, notamment localisées.

En outre, selon l'invention, on dévie latéralement ladite matière poussée lors de l'injection du gaz. Enfin, on forme, dans la masse du panneau au moins une excroissance 7 avec ladite matière déviée latéralement.

La matière en surplus est ainsi directement réutilisée dans la formation de la pièce d'où une diminution du coût total de production.

En effet, ce procédé diminue la quantité de matière consommée, le nombre d'étapes de fabrication ainsi que les stocks intermédiaires. Il permet de plus d'éviter un éventuel retraitement, difficile et coûteux, de la matière excédentaire.

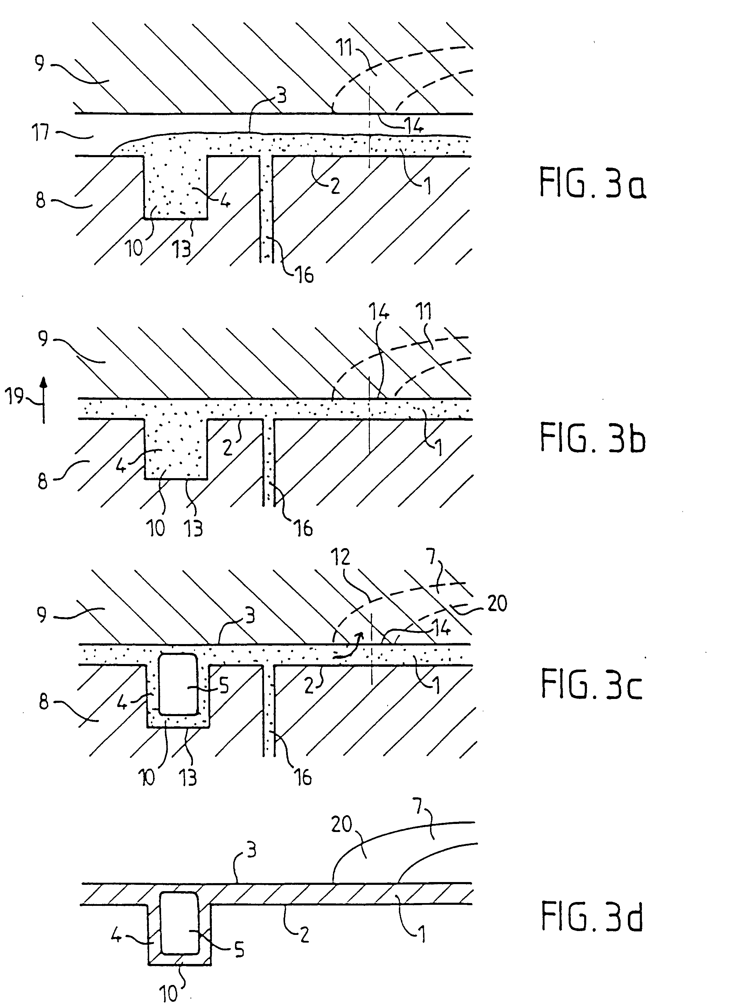

Pour cela, selon l'exemple représenté à la figure 3a, on introduit tout d'abord la matière dans le moule à partir d'une buse, non représentée sur les dessins, donnant dans un ou des conduits 16. Ce dernier débouche dans un espace 17 laissé libre entre les matrices 8, 9. La matière est répartie dans cet espace et dans des réserves 13, prévues pour réaliser les surépaisseurs 10.

Les figures 3a à 3d étant des coupes partielles, plusieurs réserves 13 ainsi que plusieurs conduits 16 peuvent être prévus suivant la forme du panneau que l'on souhaite réaliser, sans être toutefois visualisés sur les dessins.

Comme représenté à la figure 3b, on moule ensuite la couche âme 1 entre les deux matrices 8, 9. Il pourra s'agir, par exemple, d'injection compression.

En effet, ce procédé permet une meilleure répartition de la matière et assure une formation satisfaisante des surépaisseurs 10. Les deux matrices 8, 9 sont ainsi rapprochées dans le sens de la flèche repérée 19.

Comme représenté à la figure 3c, selon l'exemple de mise en oeuvre illustré, on injecte alors du gaz selon l'axe longitudinal des nervures 4. Cette opération permet d'évider les surépaisseurs 10 et de compacter la matière qui les constitue à leur périphérie pour former ainsi les poutres caissons tubulaires 5.

Lors de l'injection du gaz, ladite matière des surépaisseurs 10 est également poussée selon leur axe longitudinale et constitue ainsi une quantité donnée de matière en surplus que l'on dévie pour former l'excroissance 7.

Après refroidissement de la matière, on retire le panneau obtenu, tel que représenté à la figure 3d, du moule.

Si l'on se reporte de nouveau aux figures 1 et 2, on constate que, selon l'exemple illustré de mise en oeuvre de l'invention, on prévoit les poutres caissons tubulaires 5, notamment, du côté de la face intérieure 2 de la couche âme 1, par exemple, au moins partiellement, à la périphérie du panneau et/ou au voisinage des lieux dudit panneau destiné à recevoir des éléments d'équipement.

On constate également que l'on forme l'excroissance 7, notamment, du côté de la face extérieure 3 de la couche âme 1 et l'on constitue, avec ladite excroissance 7, une poignée 20. Il pourra s'agir, notamment, de poignées de maintien, de poignées de porte ou autre.

Comme représenté à la figure 4, selon un exemple particulier de mise en oeuvre du procédé conforme à l'invention, on prévoit, de manière à permettre la formation de ladite excroissance 7, une zone de dégagement 11 de la matière déviée latéralement dans l'une et/ou l'autre des matrices 8, 9.

Plus précisément, selon l'exemple illustré de mise en oeuvre de l'invention, on dévie latéralement une partie de la matière de la couche âme 1 prévue dans une matrice dite inférieure 8 vers au moins un orifice 14 communiquant avec la zone de dégagement 11, réalisé dans l'autre matrice dite supérieure 9. Il s'agira, notamment, de la matière des surépaisseurs 10.

L'excroissance 7 et les poutres caissons tubulaires 5 sont ainsi formées, par exemple, sur des faces opposées du panneau.

Grâce à la viscosité de la matière utilisée et à une bonne température du moule, un effet de peau permet le figement de la couche âme 1 en surface tandis que la matière reste fluide en son centre, ce qui permet son déplacement sous l'action du gaz injecté, selon le trajet de la flèche repérée 18.

La présente invention concerne également un panneau obtenu par la mise en oeuvre du procédé décrit ci-dessus, notamment destiné à réaliser un élément d'habillage intérieur de carrosserie de véhicule, tel que, par exemple, un panneau de portière, comprenant au moins une couche 1, notamment thermoplastique, constituant une âme, munie d'une face intérieure 2 et d'une face extérieure 3.

Comme illustré, ladite couche âme 1 présente des surépaisseurs 10, aptes à constituer des nervures 4 de renforcement réalisées dans la masse du panneau, formant des poutres caissons tubulaires 5, ainsi qu'au moins une excroissance 7, également réalisée dans la masse dudit panneau.

Selon un mode particulier de réalisation de l'invention, les poutres caissons tubulaires 5 et l'excroissance 7 sont prévues sur des faces opposées du panneau.

A titre d'exemple, la couche âme 1 présente ainsi lesdites poutres caissons tubulaires 5 réparties, notamment, sur sa face intérieure 2 de manière à renforcer localement ses caractéristiques de rigidité.

Lesdites poutres caissons tubulaires 5 peuvent être distribuées, au moins partiellement, à la périphérie du panneau et/ou au voisinage des lieux de celui-ci destiné à recevoir des éléments d'équipement. Dans le cas de l'application de l'invention à un panneau de portière, la pièce peut présenter des poutres caissons tubulaires 5 au voisinage, par exemple, de vide-poches, d'accoudoirs ou autres.

Par ailleurs, la couche âme 1 présente l'excroissance 7, notamment, sur sa face extérieure 3.

De plus, selon l'exemple illustré, ladite excroissance 7 constitue, par exemple, un epoignée 20. Le panneau conforme à l'invention présente ainsi, en plus de sa fonction principale d'habillage, des fonctionnalités supplémentaires grâce aux excroissances de confort 7 et aux nervures de renforcement 4.

Selon un mode particulier de réalisation, la poignée 20 est assujettie à la couche âme 1 à ses deux extrémités.

Par ailleurs, le panneau peut être revêtu, au moins partiellement, d'une peau 15, constituée, par exemple, d'un revêtement 16 de l'excroissance 17 et/ou d'un revêtement 17 du panneau, réalisés ou non dans la même matière.

Naturellement, d'autres mises en oeuvre de la présente invention, à la portée de l'homme de l'art, auraient pu être envisagées sans pour autant sortir du cadre de la présente demande.

## Revendications

1. Procédé de fabrication d'un panneau de matière, notamment destiné à réaliser un élément d'habillage intérieur de carrosserie de véhicule, tel que, par exemple, un panneau de portière, comprenant au moins une couche (1), notamment thermoplastique, constituant une âme, munie d'une face intérieure (2) et d'une face extérieure (3), dans lequel :
- on moule, entre deux matrices (8, 9), la couche âme (1) en prévoyant localement des surépaisseurs (10), aptes à constituer des nervures (4) de renforcement réalisées dans la masse du panneau, au niveau de l'une desdites matrices, dite inférieure (8),
- on injecte du gaz sous pression axialement dans lesdites surépaisseurs (10) afin de pousser la matière de ladite couche âme (1) de manière à réaliser des poutres caissons tubulaires (5), **caractérisé par le fait que** :
- on dévie latéralement la matière poussée lors de l'injection du gaz, vers au moins un orifice (14) communiquant avec une zone de dégagement (11), réalisée dans l'autre matrice dite supérieure (9),
- on forme, dans la masse du panneau, pour lui conférer des fonctionnalités de confort, au moins une excroissance (7) avec ladite matière déviée latéralement dans ladite zone de dégagement (11).

2. Procédé selon la revendication 1, **caractérisé par le fait que** l'on moule la couche âme (1) par injection-compression.

3. Procédé selon la revendication 1, **caractérisé par le fait que** l'on prévoit les poutres caissons tubulaires (5) du côté de la face intérieure (2) de la couche âme (1).

4. Procédé selon la revendication 1, **caractérisé par le fait que** l'on prévoit les poutres caissons tubulaires (5), au moins partiellement, à la périphérie du panneau.

5. Procédé selon la revendication 1, **caractérisé par le fait que** l'on prévoit les poutres caissons tubulaires (5) au voisinage des lieux du panneau destinés à recevoir des éléments d'équipement.

6. Procédé selon la revendication 1, **caractérisé par le fait que** l'on forme ladite excroissance (7) du côté de la face extérieure (3) de la couche âme (1).

7. Procédé selon la revendication 1, **caractérisé par le fait que** l'on constitue avec l'excroissance (7) une poignée (20).

8. Panneau de matière, obtenu par la mise en oeuvre du procédé selon la revendication 1, notamment destiné à réaliser un élément d'habillage intérieur de carrosserie de véhicule, tel que, par exemple, un panneau de portière, comprenant au moins une couche (1), notamment thermoplastique, constituant une âme, munie d'une face intérieure (2) et d'une face extérieure (3), **caractérisé par le fait que** ladite couche âme (1) présente :
- des surépaisseurs (10), aptes à constituer des nervures (4) de renforcement réalisées dans la masse du panneau, formant des poutres caissons tubulaires (5),
- au moins une excroissance (7) également réalisée dans la masse dudit panneau.

9. Panneau selon la revendication 8, **caractérisé par le fait que** les poutres caissons tubulaires (5) et l'excroissance (7) sont prévues sur des faces opposées dudit panneau.

10. Panneau selon la revendication 8, **caractérisé par le fait que** la couche âme (1) présente lesdites poutres caissons tubulaires (5) réparties sur sa face intérieure (2) de manière à renforcer localement les caractéristiques de rigidité du panneau.

11. Panneau selon la revendication 8 **caractérisé par le fait que** la couche âme (1) présente ladite excroissance (7) sur sa face extérieure (3).

12. Panneau selon la revendication 8, **caractérisé par le fait que** l'excroissance (7) constitue une poignée (20).

13. Panneau selon la revendication 12, **caractérisé par le fait que** la poignée (20) est assujettie à la couche âme (1) à ses deux extrémités.

14. Panneau selon la revendication 8, **caractérisé par le fait qu'**il est revêtu, au moins partiellement, d'une peau (15).

## Claims

1. Process for manufacturing a panel of material, intended, in particular, to form an item of interior trim of a vehicle body, such as, for example, a door panel, including at least one layer (1), in particular a thermoplastic layer, constituting a core, having an interior face (2) and an exterior face (3), in which:
- the core layer (1) is moulded, between two dies (8, 9), locally providing additional thicknesses (10) suitable for constituting reinforcing ribs (4) produced in the body of the panel, in the area of one of said dies, or so-called lower die (8),
- gas under pressure is injected axially into said additional thicknesses (10) in order to push the material of said core layer (1) so as to produce tubular box beams (5), **characterised by** the fact that:
- the material pushed at the time of injecting the gas is laterally diverted towards at least one orifice (14) communicating with a discharge zone (11), produced in the other, or so-called upper, die (9);
- at least one protuberance (7) is formed in the body of the panel with said material laterally diverted into said discharge zone (11), to impart convenience-providing features thereto.

2. Process according to claim 1, **characterised by** the fact that the core layer (1) is compression injection moulded.

3. Process according to claim 1, **characterised by** the fact that the tubular box beams (5) are provided on the interior face (2) side of the core layer (1).

4. Process according to claim 1, **characterised by** the fact that the tubular box beams (5) are provided, at least partially, on the periphery of the panel.

5. Process according to claim 1, **characterised by** the fact that the tubular box beams (5) are provided in the vicinity of the locations on the panel intended to receive items of equipment.

6. Process according to claim 1, **characterised by** the fact that said protuberance (7) is formed on the exterior face (3) side of the core layer (1).

7. Process according to claim 1, **characterised by** the fact that a handle (20) is constituted with the protuberance (7).

8. Panel of material, obtained by implementing the process according to claim 1, intended, in particular, to form an item of interior trim of a vehicle body, such as, for example, a door panel, including at least one layer (1), in particular a thermoplastic layer, constituting a core, having an interior face (2) and an exterior face (3), **characterised by** the fact that said core layer (1) has:
- additional thicknesses (10), suitable for constituting reinforcing ribs (4) produced in the body of the panel, forming tubular box beams (5),
- at least one protuberance (7), also produced in the body of said panel.

9. Panel according to claim 8, **characterised by** the fact that the tubular box beams (5) and the protuberance (7) are provided on opposite sides of said panel.

10. Panel according to claim 8, **characterised by** the fact that the core layer (1) has said tubular box beams (5) distributed over its interior face (2) so as to reinforce locally the rigidity characteristics of the panel.

11. Panel according to claim 8, **characterised by** the fact that the core layer (1) has said protuberance (7) on its exterior face (3).

12. Panel according to claim 8, **characterised by** the fact that the protuberance (7) constitutes a handle (20).

13. Panel according to claim 12, **characterised by** the fact that the handle (20) is fixed to the core layer (1) at its two ends.

14. Panel according to claim 8, **characterised by** the fact that it is clad, at least partially, by a skin (15).

## Patentansprüche

1. Verfahren zur Herstellung einer Materialplatte, nämlich zur Fertigung eines Innenverkleidungselementes für Fahrzeugkarosserien, wie z.B. einer Türplatte, umfassend wenigstens eine einen Kern bildende Schicht (1), nämlich eine Thermoplastschicht, die mit einer Innenfläche (2) und einer Außenfläche (3) versehen ist, bei dem:
- zwischem zwei Gesenken (8, 9) die Kernschicht (1) geformt wird, wobei örtlich Überdicken (10) vorgesehen werden, die geeignet sind, im Bereich eines der genannten Gesenke, welches als unteres Gesenk (8) bezeichnet wird, in der Masse der Platte gebildete Verstärkungsrippen (4) zu bilden,
- unter Druck stehendes Gas axial in die genannten Überdicken (10) eingespritzt wird, um das Material der genannten Kernschicht (1) so zurückzustoßen, daß rohrförmige Kastenbalken (5) gebildet werden, **dadurch gekennzeichnet, daß**:
- das während dem Einspritzen des Gases zurückgestossene Material seitlich zu wenigstens einem Loch (14) abgeleitet wird, das mit einer in dem anderen Gesenk, welches als oberes Gesenk (9) bezeichnet wird, vorgesehenen Abfuhrzone (11) in Verbindung steht,
- mit dem genannten, seitlich in der genannten Abfuhrzone (11) abgeleiteten Material wenigstens ein Auswuchs (7) in der Masse der Platte gebildet wird, um dieser letzten Bequemlichkeitseigenschaften zu verleihen.

2. Verfahren nach Anspruch 1, **dadurch gekennzeichnet, daß** die Kernschicht (1) durch Einspritzen-Zusammenpreßen geformt wird.

3. Verfahren nach Anspruch 1, **dadurch gekennzeichnet, daß** die rohrförmigen Kastenbalken (5) an der Seite der Innenfläche (2) der Kernschicht (1) vorgesehen werden.

4. Verfahren nach Anspruch 1, **dadurch gekennzeichnet, daß** die rohrförmigen Kastenbalken (5) wenigstens zum Teil am Umkreis der Platte vorgesehen werden.

5. Verfahren nach Anspruch 1, **dadurch gekennzeichnet, daß** die rohrförmigen Kastenbalken (5) in der Nähe der Bereiche der Platte, die dazu bestimmt sind, die Ausrüstungselemente aufzunehmen, vorgesehen werden.

6. Verfahren nach Anspruch 1, **dadurch gekennzeichnet, daß** der genannte Auswuchs (7) an der Seite der Außenfläche (3) der Kemschicht (1) gebildet wird.

7. Verfahren nach Anspruch 1, **dadurch gekennzeichnet, daß** mit dem Auswuchs (7) ein Griff (20) gebildet wird.

8. Durch Anwendung des Verfahrens nach Anspruch 1 erhaltene Materialplatte, nämlich zur Fertigung eines Innenverkleidungselementes für Fahrzeugkarosserien, wie z.B. einer Türplatte, umfassend wenigstens eine einen Kern bildende Schicht (1), nämlich eine Thermoplastschicht, die mit einer Innenfläche (2) und einer Außenfläche (3) versehen ist, **dadurch gekennzeichnet, daß** die genannte Kernschicht (1):
- Überdicken (10), die geeignet sind, in der Masse der Platte gebildete Verstärkungsrippen (4) zu bilden, die rohrförmigen Kastenbalken (5) bilden,
- wenigstens einen Auswuchs (7), der ebenfalls in der Masse der genannten Platte gebildet wird, umfaßt.

9. Platte nach Anspruch 8, **dadurch gekennzeichnet, daß** die rohrförmigen Kastenbalken (5) und der Auswuchs (7) an gegenüberliegenden Flächen der genannten Platte vorgesehen sind.

10. Platte nach Anspruch 8, **dadurch gekennzeichnet, daß** die Kernschicht (1) die genannten rohrförmigen Kastenbalken (5) über ihre Innenfläche (2) verteilt aufweist, sodaß die Steifheitseigenschaften der Platte örtlich erhöht werden.

11. Platte nach Anspruch 8, **dadurch gekennzeichnet, daß** die Kernschicht (1) den genannten Auswuchs (7) an ihrer Außenfläche (3) aufweist.

12. Platte nach Anspruch 8, **dadurch gekennzeichnet, daß** der Auswuchs (7) einen Griff (20) bildet.

13. Platte nach Anspruch 12, **dadurch gekennzeichnet, daß** der Griff (20) mit seinen beiden Enden an der Kernschicht (1) befestigt ist.

14. Platte nach Anspruch 8, **dadurch gekennzeichnet, daß** sie wenigstens zum Teil mit einer Haut (15) überzogen ist.
